# EUROPÄISCHE PATENTSCHRIFT

(11) **EP 3 737 528 B1**
(45) Veröffentlichungstag und Bekanntmachung des Hinweises auf die Patenterteilung: **23.02.2022**
(21) Anmeldenummer: 18706374.8
(22) Anmeldetag: 11.01.2018
(51) Int. Cl.: B23Q 1/54, B23Q 1/52

(54) **MAGNETISCHE HALTEVORRICHTUNG**
MAGNETIC RETAINING DEVICE
DISPOSITIF DE RETENUE MAGNÉTIQUE

(43) Veröffentlichungstag der Anmeldung: 18.11.2020
(73) Patentinhaber: Berndorf Band GmbH, 2560 Berndorf (AT)
(72) Erfinder: BADER, Dieter, 2560 Berndorf (AT); PRUNBAUER, Maximilian, 1180 Wien (AT); FIRMBERGER, Gerald, 2512 Tribuswinkel (AT)
(74) Vertreter: Burger, Hannes
(86) Internationale Anmeldenummer: PCT/AT2018/060009
(87) Internationale Veröffentlichungsnummer: WO 2019/136500

(56) Entgegenhaltungen:
- WO-A1-2012/144769
- WO-A1-2015/071878
- DE-A1- 2 931 539
- DE-C- 971 096
- FR-A1- 2 308 177
- GB-A- 563 333

## Beschreibung

Die Erfindung betrifft eine Bearbeitungsvorrichtung umfassend eine magnetische Haltevorrichtung, insbesondere Spannvorrichtung, umfassend eine Haltefläche, zumindest einen ersten Permanentmagneten und zumindest einen zweiten Permanentmagneten, wobei der zumindest eine zweite Permanentmagnet relativ zu dem zumindest einen ersten Permanentmagneten um eine Drehachse drehbar gelagert ist, wodurch die Polrichtung des zweiten Permanentmagneten relativ zur Polrichtung des ersten Permanentmagneten verdrehbar ist; sowie eine Bearbeitungsvorrichtung.

Die WO 2015/071878 A1 offenbart eine magnetische Vorrichtung zum Heben bzw. Halten von ferromagnetischen Werkstücken. Die Vorrichtung umfasst einen ferromagnetischen Gehäuseblock, in dem eine schaltbare Magnetanordnung angeordnet ist. Die Magnetanordnung umfasst fixierte Permanentmagnete und rotierbare, zylindrische Permanentmagnete. In einer "Aus"-Position sind die entsprechenden Magnetfelder entgegengesetzt, wodurch sie einander im Wesentlichen auslöschen. In einer "Ein"-Position sind die Magnetfelder gleich ausgerichtet, wodurch sie sich verstärken.

Die FR 2 308 177 A1 offenbart eine Halteeinrichtung aus Permanentmagneten, bei der ein erster, kreisförmiger Permanent innerhalb einer kreisförmigen Ausnehmung eines zweiten Permanentmagneten drehbar gelagert ist.

Die GB 563 333 A offenbart eine magnetische Halte- oder Trennvorrichtung mit stationären Permanentmagneten und rotierbaren Permanentmagneten. Durch Rotation der rotierbaren Permanentmagneten relativ zu den stationären Permanentmagneten zwischen einer "Aus"- und einer "Ein"-Position kann die Haltekraft verändert werden.

Die WO 2012/144769 A1 offenbart ebenfalls eine Haltevorrichtung, welcher das Prinzip eines - relativ zu stationären Permanentmagneten - verdrehbaren Permanentmagneten zugrunde liegt.

Die DE 971 096 C offenbart eine mit Dauermagneten ausgerüstete Vorrichtung zum Halten von bzw. zum Festhalten an Gegenständen aus ferromagnetischen Stoffen. Die Vorrichtung umfasst als Rotationskörper gestaltete, quer zur Achse magnetisierte Dauermagnetpaare in entsprechenden Bohrungen eines Gehäuses aus ferromagnetischem Werkstoff. Derart kann die Vorrichtung in Arbeitsstellung bzw. in Ausschaltstellung (Kurzschlussstellung) gebracht werden.

Die - einen anderen Gegenstand betreffende - DE 29 31 539 A1 offenbart eine schaltbare, dauermagnetische Bremse für Schienenfahrzeuge mit in Längsrichtung der Schiene angeordneten Polstücken wechselnder Polarität, an denen feststehende und verdrehbare Dauermagnete anliegen.

Die DE19745930A1 offenbart eine magnetische Spannvorrichtung für miteinander zu verschweißende Zuschnitte aus ferromagnetischem Stahlblech. Das Stahlblech wird durch die Kraft eines Permanentmagneten auf einer Spannplatte festgespannt. Der Permanentmagnet ist mittels eines Stellgliedes in Form einer Zylinder-Kolben-Einheit aus seiner Spannposition in eine zurückgezogene Neutralposition verstellbar. In dieser ist die vom Permanentmagneten ausgehende Kraft an der Haltefläche der Spannplatte zu klein, um den Zuschnitt festhalten zu können. Das Prinzip dieser Lösung besteht darin, dass der Abstand zwischen Magnet und Blech verändert wird. Nachteilig an dieser Lösung ist jedoch, dass der bewegliche Permanentmagnet während des Spannens an dem Blech anhaftet und zum Zwecke des Freigebens in Richtung weg vom Blech zurückgezogen wird. Bevor sich der Magnet endgültig vom Blech trennt, wird das Blech jedoch nachgeben. Dieser diskontinuierliche Vorgang kann zu einer lokalen, gegebenenfalls irreversiblen Verformung des Bleches führen, was sich insbesondere bei kleinen Blechdicken negativ auswirkt.

Die AT403894B offenbart eine Vorrichtung zum elektromagnetischen Aufspannen und Verbinden, insbesondere Verschweißen von Blechen. Die Vorrichtung umfasst Spannelemente mit einem schaltbareren Elektromagnet und mit einer Haltefläche sowie ein Gegendruckelement (Anker genannt). Das Blech wird dabei zwischen Haltefläche und Gegendruckelement eingespannt. Nachteilig an den bekannten Elektromagneten ist jedoch, dass diese relativ schwer sind und sich daher Logistik und Transport der bekannten Anlagen aufwendig gestalten. Auch ist der Steuerungsaufwand bei den bekannten Magneten relativ hoch. Darüber hinaus weisen Elektromagnete einen elektrischen Widerstand auf, was zu Wärmeverlusten führt.

Um konstante Bedingungen zu gewährleisten, müssen die bekannten Elektromagneten gekühlt werden. Wenn ein großer Spalt zwischen dem Magneten und dem zu fixierenden Blech besteht und somit eine große Kraft erzeugt werden muss, muss auch die thermische Leistung erhöht werden.

Die CN106141525A offenbart eine Spannvorrichtung mit einer aus Permanentmagneten gebildeten ersten und zweiten Magnetanordnung, wobei die zweite Magnetanordnung relativ zur ersten Magnetanordnung linear verschiebbar ist. Eine Relativbewegung der Magnetanordnungen bewirkt, dass die magnetische Haltekraft verändert wird. In einer Relativposition sind Permanentmagnete mit gleicher Polrichtung nebeneinander angeordnet, wodurch sich eine hohe Haltekraft ergibt. In einer anderen Relativposition sind Permanentmagnete mit entgegengesetzter Polrichtung nebeneinander angeordnet. Aufgrund ihrer entgegengesetzten Polrichtung "deaktivieren" sich die Permanentmagnete gegenseitig. Der Nachteil der in der CN106141525A gezeigten Spannvorrichtung besteht darin, dass diese in der Praxis nur unzureichend funktioniert. Zum einen konnte eine Reproduzierbarkeit der Haltekraft nicht im erwarteten Ausmaß erreicht werden. Zum anderen ist eine kontinuierliche Erhöhung der Haltekraft nicht möglich, da die Magnetanordnung aufgrund der starken Magnetfelder von der Freigabeposition in die Halteposition springt. De facto waren mit einer solchen Spannvorrichtung nur zwei Schaltzustände möglich, nämlich: Halten oder Nicht-Halten. Zudem benötigt eine solche Spannvorrichtung eine Vielzahl von Permanentmagneten und weist daher von vornherein einen hohen Platzbedarf auf, der sich aufgrund der Bewegung der zweiten Magnetanordnung an den Enden der Anordnung, d.h. in Verschieberichtung, weiter erhöht. Die Anforderungen an den Verschiebemechanismus sind sehr hoch, sowohl hinsichtlich der bereitzustellenden Kraft als auch hinsichtlich der ständigen Vor- und Rückbewegung. Schließlich stellte sich eine solche Anordnung als kostenintensiv und verschleißanfällig dar.

Die Erfindung setzt sich zum Ziel die Nachteile des Standes der Technik zu beseitigen und eine magnetische Haltevorrichtung bereitzustellen, die einerseits keine Elektromagnete erfordert, wodurch eine thermische Belastung der Haltevorrichtung und ihrer Umgebung sowie des von der Haltevorrichtung gehaltenen Werkstückes von vornherein vermieden wird, und die andererseits ohne unerwünschte mechanische Einwirkungen auf das zu haltende Werkstück funktioniert. Es soll zudem die Reproduzierbarkeit der Haltekraft sowie des kontinuierlichen Erhöhens bzw. Verringerns der Haltekraft gewährleistet werden. Außerdem soll die Möglichkeit geschaffen werden, die Haltekraft beliebig einzustellen. Anstelle von nur zwei Schaltzuständen soll die Haltekraft kontinuierlich einstellbar sein. Die Haltevorrichtung soll zudem möglichst platzsparend, kostengünstig und verschleißarm sein.

Die Aufgabe wird mit einer Bearbeitungsvorrichtung nach Anspruch 1 gelöst.

Die Drehachse des zumindest einen zweiten Permanentmagneten steht quer, vorzugsweise im Wesentlichen senkrecht, zur Haltefläche. Neben einer platzsparenden Konstruktion kann dabei der (durch Verdrehung veränderbare) magnetische Fluss am effizientesten in eine Haltekraft umgesetzt werden.

Das Verdrehen des zweiten Permanentmagneten relativ zum ersten Permanentmagneten ermöglicht eine kontinuierliche Änderung des Winkels zwischen der Polrichtung des zweiten Permanentmagneten und der Polrichtung des ersten Permanentmagneten. Die durch die Haltefläche vermittelte Haltekraft ist von diesem Winkel abhängig und kann daher durch Veränderung der Relativdrehstellung beliebig eingestellt werden. Die Erfindung betrifft daher eine verstellbare magnetische Haltevorrichtung mit - vorzugsweise kontinuierlich - veränderbarer Haltekraft.

Je geringer die Winkelabweichung der Polrichtung des zweiten Permanentmagneten von jener des ersten Permanentmagneten ist (also wenn die erste Polrichtung und die zweite Polrichtung im Wesentlichen in dieselbe Richtung weisen), desto stärker ist die Haltekraft. Die magnetischen Flusslinien der Permanentmagnete schließen sich hier vornehmlich außerhalb der Haltefläche. Sie verlaufen daher in einem Bereich, in dem ein zu haltender Gegenstand positioniert wird und/oder ein Gegendruckelement (z.B. aus weichmagnetischem Material) angeordnet ist. In einer solchen ersten Relativdrehstellung (keine oder geringe Winkelabweichung zwischen den Polrichtungen) befindet sich die Haltevorrichtung somit in einem haltenden oder spannenden bzw. aktivierten Zustand.

Bei entgegengesetzten Polrichtungen entsteht ein magnetischer Kurzschluss zwischen dem zweiten Permanentmagnet und dem ersten Permanentmagnet. Mit anderen Worten: Aufgrund ihrer unterschiedlichen, insbesondere entgegengesetzten Polrichtung "deaktivieren" sich die Permanentmagnete gegenseitig zumindest in einem bestimmten Ausmaß. Der magnetische Kurzschluss verhindert, dass magnetischer Fluss in ausreichendem Maße durch die Haltefläche verläuft. In einer solchen zweiten Relativstellung befindet sich die Haltevorrichtung somit in einem freigebenden bzw. deaktivierten Zustand.

Durch die Erfindung wird nicht nur die Reproduzierbarkeit erhöht, d.h. eine definierte Haltekraft in Abhängigkeit des jeweiligen Drehwinkels, sondern auch die Möglichkeit geschaffen, die Haltekraft je nach Erfordernissen gezielt auf einen bestimmten Wert einzustellen.

Die Polrichtung ist die Richtung von einem Pol des Permanentmagneten (z.B. Südpol) zum anderen Pol des Permanentmagneten (z.B. Nordpol).

Selbstverständlich können in einer Ausführungsform der Erfindung auch beide Permanentmagnete drehbar gelagert sein.

Der Vorteil der Erfindung besteht insbesondere darin, dass die Haltevorrichtung durch eine Relativdrehung zwischen den Permanentmagneten nicht nur von einem deaktivierten in einen aktivierten Zustand, sondern reproduzierbar in jeden beliebigen Zwischenzustand gebracht werden kann. Die auf den zu haltenden Gegenstand wirkende Haltekraft kann dabei kontinuierlich verändert werden. Verschiedene Relativstellungen bewirken verschiedene Haltekräfte. Die Haltevorrichtung kann dabei derart ausgelegt werden, dass die Beschaffenheit der Haltefläche unabhängig von der Relativbewegung der Magnetanordnungen ist, d.h. die Haltefläche als solche bleibt unverändert. Im Gegensatz dazu verändert sich die Haltefläche der DE19745930A1 durch Zurückziehen des Permanentmagneten, was zu den eingangs erwähnten Problemen führt.

Die Haltevorrichtung dient zum Halten bzw. (Ein-)Spannen von Gegenständen, insbesondere Werkstücken. Ein wichtiges Einsatzgebiet der erfindungsgemäßen Haltevorrichtung sind Bearbeitungsvorrichtungen zum Bearbeiten von Werkstücken, insbesondere flächigen Werkstücken wie Blechen, Bändern und dgl.. Dabei wird das Werkstück während eines Bearbeitungsvorganges (z.B. Schweißen, Schneiden, Fräsen, Verbinden mit einem anderen Stück, etc.) durch die Haltevorrichtung fixiert bzw. eingespannt. Die Erfindung bezieht sich somit auch auf eine Bearbeitungsvorrichtung zur Bearbeitung von Werkstücken, die eine erfindungsgemäße Haltevorrichtung umfasst.

Vorzugsweise sind die Permanentmagnete Seltene-Erd-Magnete, insbesondere Neodym-Magnete, vorzugsweise mit Magnetfeldstärken von jeweils mehr als 1 Tesla.

Eine bevorzugte Ausführungsform zeichnet sich dadurch aus, dass die Haltevorrichtung zumindest zwei, vorzugsweise eine Vielzahl von ersten Permanentmagneten und zumindest zwei, vorzugsweise eine Vielzahl von zweiten Permanentmagneten aufweist, wobei die zweiten Permanentmagnete relativ zu den ersten Permanentmagneten jeweils um eine Drehachse drehbar gelagert sind, wodurch die Polrichtungen der zweiten Permanentmagnete relativ zu den Polrichtungen der ersten Permanentmagnete verdrehbar sind. Dadurch kann das erfindungsgemäße Prinzip räumlich erweitert werden, wodurch größere Halteflächen mit relativ gleichmäßiger Kraftverteilung verwirklicht werden können. Besonders interessant bei dieser Variante ist die Möglichkeit, die Haltekraft abhängig von der Position entlang der Haltefläche einzustellen. Die zweiten Permanentmagnete müssen nämlich nicht im selben Ausmaß verdreht werden, sondern können auch individuell eingestellt werden. Auf diese Weise können für verschiedene Bereiche der Haltefläche unterschiedliche hohe Haltekräfte eingestellt werden. Dies kann z.B. dann erforderlich sein, wenn ein inhomogenes Werkstück (z.B. einer ungleichmäßigen Gewichtsverteilung) gehalten werden muss.

Eine bevorzugte Ausführungsform zeichnet sich dadurch aus, dass die ersten Permanentmagnete und die zweiten Permanentmagnete entlang einer Richtung alternierend angeordnet sind, wobei vorzugsweise die Drehachsen der zweiten Permanentmagneten parallel zueinanderstehen. Dies bedeutet, dass auf einen ersten Permanentmagnet ein zweiter Permanentmagnet folgt und auf den zweiten Permanentmagneten wieder ein erster Permanentmagnet, usw.. Ein erster Permanentmagnet und ein zweiter Permanentmagnet können dabei als funktionale Einheit betrachtet werden, die unabhängig von anderen solchen Einheiten eingestellt werden können.

Eine bevorzugte Ausführungsform zeichnet sich dadurch aus, dass die Permanentmagnete entlang einer Richtung parallel zur Haltefläche nacheinander - vorzugsweise unmittelbar nacheinander - angeordnet sind. Dadurch kann bei entgegengesetzten Polrichtungen ein möglichst lückenloser magnetischer Kurzschluss erzeugt werden, wohingegen bei gleichen Polrichtungen eine maximale Verstärkung des durch die Haltefläche tretenden Flusses und damit der Haltekraft erreicht wird.

Eine bevorzugte Ausführungsform zeichnet sich dadurch aus, dass der zumindest eine zweite Permanentmagnet relativ zu dem zumindest einen ersten Permanentmagneten um zumindest 90°, vorzugsweise um zumindest 180°, besonders bevorzugt um zumindest 360°, verdrehbar ist. Dadurch wird - je nach Anwendungsfall - ein ausreichendes Ausmaß, in dem die erste Polrichtung und die zweite Polrichtung gegeneinander verdrehbar sind, zur Verfügung gestellt. Besonders bevorzugt ist, wenn der/die zweite(n) Permanentmagnet(e) um mehr als 360° bzw. unbeschränkt - d.h. in endlos wiederholbaren Umdrehungen (ohne Umkehr der Drehrichtung) - um die Drehachse drehbar sind. Bei einer Betätigung durch einen Drehantrieb könnte dieser auch nur in einer Richtung drehend ausgebildet sein.

Eine bevorzugte Ausführungsform zeichnet sich dadurch aus, dass die Polrichtung des zumindest einen ersten Permanentmagneten und die Polrichtung des zumindest einen zweiten Permanentmagneten in einer ersten Relativdrehstellung in dieselbe Richtung und in einer zweiten Relativdrehstellung in entgegengesetzte Richtungen weisen. In der ersten Relativdrehstellung wird maximale Haltekraft und in der zweiten Relativdrehstellung minimale bzw. keine Haltekraft bereitgestellt.

Eine bevorzugte Ausführungsform zeichnet sich dadurch aus, dass die Drehachse des zumindest einen zweiten Permanentmagneten quer, vorzugsweise im Wesentlichen senkrecht, zur Polrichtung des zumindest einen zweiten Permanentmagneten steht. Auf diese Weise wird bei einer Verdrehung eines zweiten Permanentmagneten eine maximale Veränderung des magnetischen Flusses erreicht.

Eine bevorzugte Ausführungsform zeichnet sich dadurch aus, dass die Drehachse des zumindest einen zweiten Permanentmagneten durch den zweiten Permanentmagneten geht, vorzugsweise mit einer Achse des zweiten Permanentmagneten zusammenfällt. Dadurch benötigt die Lagerung des zweiten Permanentmagneten unabhängig von seiner Relativdrehstellung geringsten Platzbedarf.

Eine bevorzugte Ausführungsform zeichnet sich dadurch aus, dass in einer ersten Relativdrehstellung gleichnamige Pole des zumindest einen ersten Permanentmagneten und des zumindest einen zweiten Permanentmagneten einander näher sind als in einer zweiten Relativdrehstellung. Je näher gleichnamige Pole sind, desto höher ist die Haltekraft.

Eine bevorzugte Ausführungsform zeichnet sich dadurch aus, dass der zumindest eine erste Permanentmagnet relativ zur Haltefläche drehfest angeordnet ist und der zumindest eine zweite Permanentmagnet relativ zur Haltefläche drehbar angeordnet ist. Die Anordnung bzw. Befestigung der ersten Permanentmagnete kann dadurch sehr einfach und kostengünstig erfolgen.

Wie bereits erwähnt kann in einer alternativen Ausführungsform der zumindest eine erste Permanentmagnet ebenfalls (relativ zur Haltefläche) drehbar gelagert sein.

Eine bevorzugte Ausführungsform zeichnet sich dadurch aus, dass die Polrichtung des zumindest einen ersten Permanentmagneten und die Polrichtung des zumindest einen zweiten Permanentmagneten, vorzugsweise in sämtlichen Relativdrehstellungen, im Wesentlichen parallel zur Haltefläche stehen und/oder dass die Permanentmagnete in Form von Platten oder Scheiben ausgebildet sind, die im Wesentlichen senkrecht zur Haltefläche stehen. Dies ermöglicht eine besonders platzsparende Konstruktion, vor allem in Richtung senkrecht zur Haltefläche. Die Permanentmagnete können nämlich in Richtung parallel zur Haltefläche nacheinander angeordnet sein.

In einer bevorzugten Ausführungsform stehen die Polflächen des zumindest einen ersten Permanentmagneten und/oder die Polflächen des zumindest einen zweiten Permanentmagneten im Wesentlichen senkrecht zur Haltefläche. Durch Vergrößerung der magnetischen Polflächen kann die Haltekraft erhöht werden, ohne die Haltefläche selbst vergrößern zu müssen.

In einer bevorzugten Ausführungsform ist jeweils die Polfläche eines Permanentmagneten größer als, vorzugsweise zumindest doppelt so groß wie, die sich durch Normalprojektion des Permanentmagneten auf die Haltefläche ergebende Projektionsfläche.

Die Haltekraft einer magnetisch durchflossenen Pol- oder Haltefläche ergibt sich im Wesentlichen in Newton je cm² [N/cm²] als (40 x B²), wobei B die magnetische Flussdichte in Tesla ist. Da die maximale Remanenz von Permanentmagneten mit etwa 1,4 Tesla begrenzt ist und bei realen magnetischen Widerständen und Verlusten meist nur mit 0,8 Tesla angenommen werden kann, ist die maximal erreichbare Kraftdichte 40 × 0,8² = 26 N/cm². Durch Vergrößerung der Haltefläche kann jede beliebige Haltekraft erreicht werden. Wenn die zur Verfügung stehende Fläche begrenzt ist (wie dies bei Haltevorrichtungen meist der Fall ist), muss für eine Erhöhung der Haltekraft die magnetische Flussdichte erhöht werden. Dies kann zum Beispiel durch Polschuhe aus weichmagnetischem Eisen auf 1,7 Tesla erfolgen. Damit kann eine Kraftdichte von 40 × 1,7² = 115 N/cm² erreicht werden. Durch Anordnung der magnetischen Polflächen senkrecht zur Haltefläche ist es möglich, die Polflächen der Permanentmagneten zu vergrößern ohne die Halteflächen verändern zu müssen.

Entlang der Anordnung der Permanentmagnete erstreckt sich zumindest ein Polschuh durchgängig (d.h. ohne magnetisch isolierende Unterbrechungen wie Luftspalte oder Trennungen aus nichtmagnetischem Material), wobei sich vorzugsweise beidseits der Anordnung der Permanentmagnete je ein Polschuh durchgängig erstreckt. Der/die aus weichmagnetischem Material gebildeten Polschuh/-e sind durchgängig, d.h. weisen keine magnetisch isolierenden Unterbrechungen (z.B. Luftspalte, Trennungen aus nichtmagnetischem Material) auf. Dadurch tragen sie wesentlich zur mechanischen Stabilität der Haltevorrichtung bzw. der Haltefläche bei. Eine Beschränkung der Haltekraft oder das Nullsetzen der Haltekraft in einem bestimmten Bereich entlang der Anordnung der Permanentmagnete kann durch unabhängig voneinander betätigbare Permanentmagnete realisiert werden.

Eine bevorzugte Ausführungsform zeichnet sich dadurch aus, dass sich der zumindest eine Polschuh entlang der gesamten Anordnung der Permanentmagnete durchgängig (d.h. ohne magnetisch isolierende Unterbrechungen) erstreckt. Diese Ausführungsform bietet überhaupt maximale Stabilität durch die Polschuhe entlang der gesamten Haltefläche.

Eine bevorzugte Ausführungsform zeichnet sich dadurch aus, dass die Haltevorrichtung zumindest einen Aktuator, insbesondere einen Motor, umfasst, mit dem der zumindest eine zweite Permanentmagnet relativ zu dem zumindest einen ersten Permanentmagnet drehbar ist. Dadurch wird eine automatische Steuerung und das Anfahren einer definierten Drehstellung ermöglicht.

Eine bevorzugte Ausführungsform zeichnet sich dadurch aus, dass die zweiten Permanentmagnete unabhängig voneinander drehbar sind, vorzugsweise durch unabhängig ansteuerbare Aktuatoren, oder dass die zweiten Permanentmagnete miteinander gekoppelt und synchron drehbar sind, vorzugsweise durch einen gemeinsamen Aktuator. Eine unabhängige Ansteuerung der zweiten Permanentmagnete ermöglicht - wie bereits erwähnt - die Einstellung unterschiedlicher Haltekräfte für unterschiedliche Bereiche der Haltefläche.

Eine bevorzugte Ausführungsform zeichnet sich dadurch aus, dass die Permanentmagnete, vorzugsweise zur Gänze, innerhalb eines Gehäuses, welches vorzugsweise in Form eines Blockes ausgebildet ist, angeordnet sind. Dadurch werden die Magnete vor äußeren Einflüssen weitestgehend abgeschirmt.

Eine bevorzugte Ausführungsform zeichnet sich dadurch aus, dass die Haltevorrichtung zumindest eine drehbar gelagerte Halterung aufweist, die einen zweiten Permanentmagneten hält, wobei vorzugsweise die Halterung in einer zylinderförmigen Aufnahme der Haltevorrichtung eingesetzt ist. Der zweite Permanentmagnet wird hier durch Drehung der Halterung gedreht.

Eine bevorzugte Ausführungsform zeichnet sich dadurch aus, dass die zumindest eine Halterung einen Feldformungsabschnitt aus weichmagnetischem Material trägt, der neben dem zweiten Permanentmagneten angeordnet ist. Dadurch werden die Feldlinien in optimaler Weise und auf kleinem Raum geformt, insbesondere werden in der ersten Relativdrehstellung die Feldlinien durch die Haltefläche "geführt", während in der zweiten Relativdrehstellung die Feldlinien von dem ersten Permanentmagneten zu dem zweiten Permanentmagneten "geführt" werden, um einen magnetischen Kurzschluss zu erzeugen.

Eine bevorzugte Ausführungsform zeichnet sich dadurch aus, dass die zumindest eine Halterung von einer der Haltefläche abgewandten Seite der Haltevorrichtung zugänglich ist. An dieser Seite kann auch die Anbindung an einen Aktuator zum Verdrehen des/der zweiten Permanentmagnete erfolgen.

Eine bevorzugte Ausführungsform zeichnet sich dadurch aus, dass die Haltevorrichtung eine Spannvorrichtung zum Einspannen eines vorzugsweise blechförmigen Gegenstandes ist und ein Gegendruckelement mit einer der Haltefläche zugewandten Gegendruckfläche umfasst, wobei vorzugsweise das Gegendruckelement aus weichmagnetischem Material gebildet ist und/oder einen Magneten umfasst.

Eine bevorzugte Ausführungsform zeichnet sich dadurch aus, dass die Haltevorrichtung ein Spannprofil mit zwei vorzugsweise schräg abragenden Schenkeln umfasst. Die dem zu haltenden Gegenstand zugewandten Schenkelenden sorgen für eine lokal erhöhte Spannkraft, um den Gegenstand insbesondere im Arbeitsbereich eines Bearbeitungswerkzeuges besonders zuverlässig zu fixieren. Das Spannprofil kann z.B. einen U-förmigen Querschnitt aufweisen, wobei die Schenkel und ein Rücken des Spannprofils Schenkel und Grundseite eines offenen Trapezes bilden.

Eine bevorzugte Ausführungsform zeichnet sich dadurch aus, dass das Spannprofil an dem Gegendruckelement ausgebildet ist, wobei vorzugsweise die Gegendruckfläche in Richtung zur ihrer Flächennormalen relativ zu den Enden der Schenkel zurückversetzt ist, vorzugsweise um höchstens 1mm, besonders bevorzugt um höchstens 0,5mm. Beim Andrücken des Gegenelementes an den Gegenstand (insb. blech- oder bandförmiges Werkstück) - bewirkt durch die magnetische Kraft des durch die Magnetanordnungen gebildeten Magnetverbundes - verformen sich die Schenkel zunächst geringfügig bevor die Gegendruckfläche an dem Gegenstand anliegt. Im Bereich der Schenkel wird daher eine höhere Kraft auf den Gegenstand ausgeübt.

Eine bevorzugte Ausführungsform zeichnet sich dadurch aus, dass der durch die Permanentmagnete gebildete Magnetverbund in Bezug auf das Spannprofil asymmetrisch angeordnet ist, wobei der Abstand des Magnetverbundes zu dem einen Schenkel des Spannprofils größer, vorzugsweise um 20% größer, ist als der Abstand des Magnetverbundes zu dem anderen Schenkel. Dadurch kann auf elegante Weise erreicht werden, dass die durch den einen Schenkel auf den zu haltenden Gegenstand ausgeübte Kraft größer ist als die durch den anderen Schenkel ausgeübte Kraft. Eine höhere Kraft (und somit zuverlässigere Fixierung) kann im Bearbeitungsbereich eines Bearbeitungswerkzeuges nötig sein.

Zum besseren Verständnis der Erfindung wird diese anhand der nachfolgenden Figuren näher erläutert.

Es zeigen jeweils in stark vereinfachter, schematischer Darstellung:
- Fig. 1: eine Haltevorrichtung im Schnitt parallel zur Haltefläche in einer ersten Relativdrehstellung der zweiten Permanentmagnete (hohe Haltekraft);
- Fig. 2: die Haltevorrichtung aus Fig. 1 in einer zweiten Relativdrehstellung der zweiten Permanentmagnete (keine oder geringe Haltekraft);
- Fig. 3: die Haltevorrichtung im Schnitt senkrecht zur Haltefläche;
- Fig. 4: das Prinzip der Erfindung anhand der ersten Relativposition;
- Fig. 5: das Prinzip der Erfindung anhand der zweiten Relativposition;
- Fig. 6: eine Spannvorrichtung mit Gegendruckelement und Spannprofil
- Fig. 7: einen Permanentmagneten senkrecht zur Haltefläche
- Fig. 8: eine Haltevorrichtung mit zentral angeordneten Permanentmagneten,

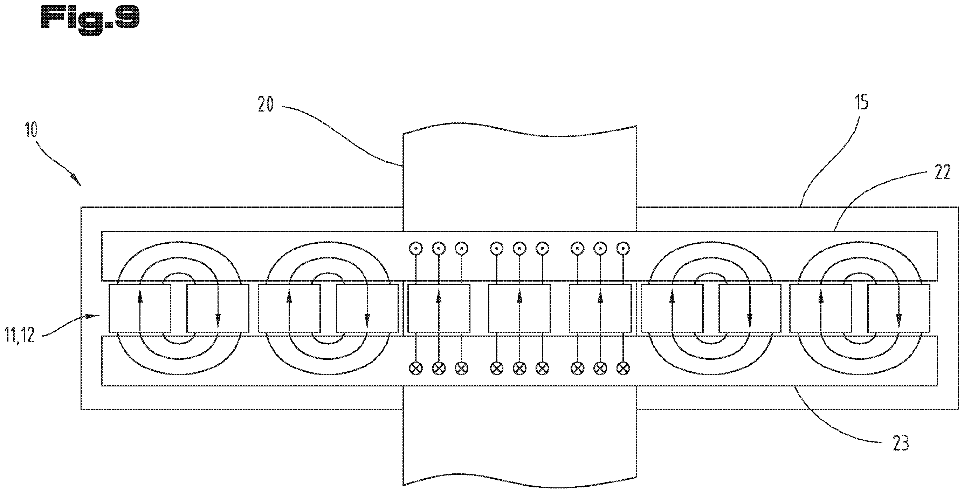

- Fig. 9: eine Haltevorrichtung mit unabhängig voneinander betätigbaren Permanentmagneten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der Haltevorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

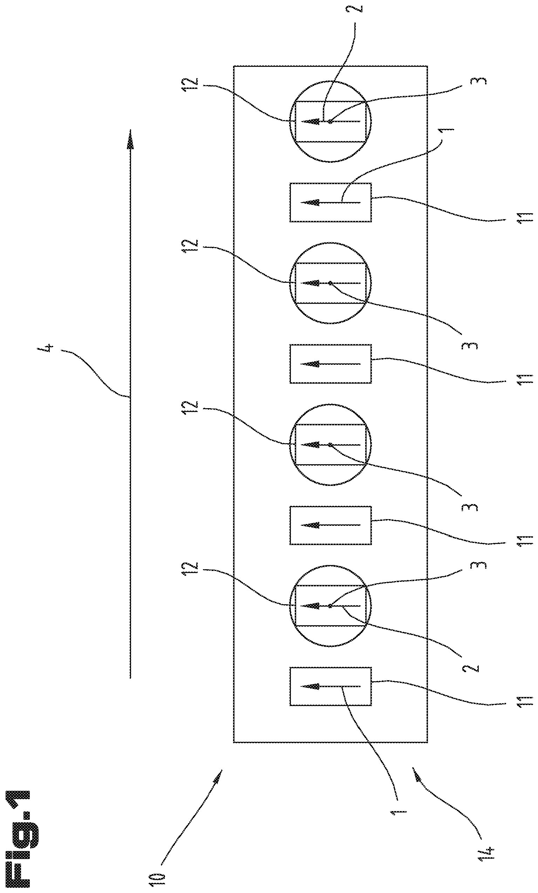

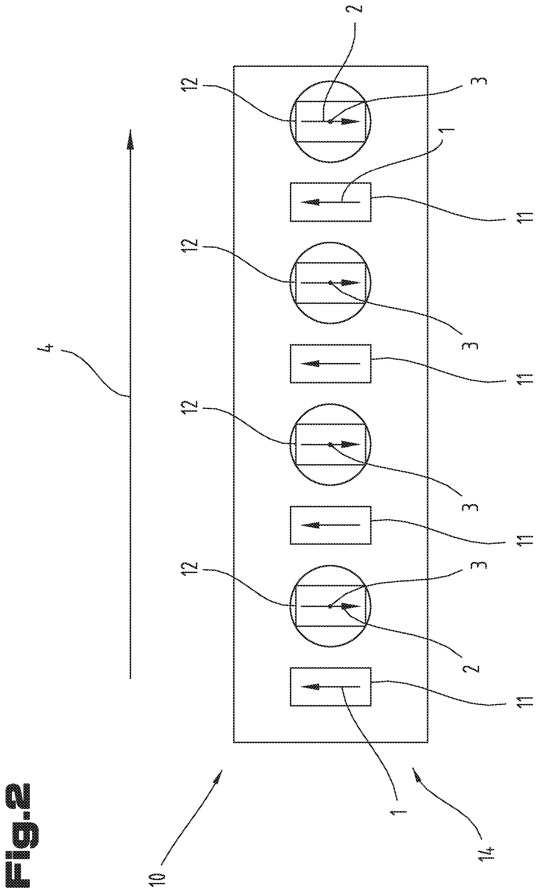

Die Fig. 1 bis 3 zeigen ein besonders bevorzugtes Ausführungsbeispiel einer erfindungsgemäßen Haltevorrichtung zum Halten bzw. (Auf)Spannen eines Gegenstandes, insbesondere Werkstückes. Die schnittbildliche Darstellung der Fig. 1 zeigt die Haltevorrichtung im haltenden bzw. aktivierten Zustand: die Haltekraft ist so hoch, dass ein Gegenstand direkt oder mittels eines Gegendruckelements gehalten bzw. fixiert werden kann. Fig. 2 zeigt hingegen den freigebenden bzw. deaktivierten Zustand: die Haltekraft reicht nicht aus, um einen Gegenstand halten bzw. aufspannen zu können.

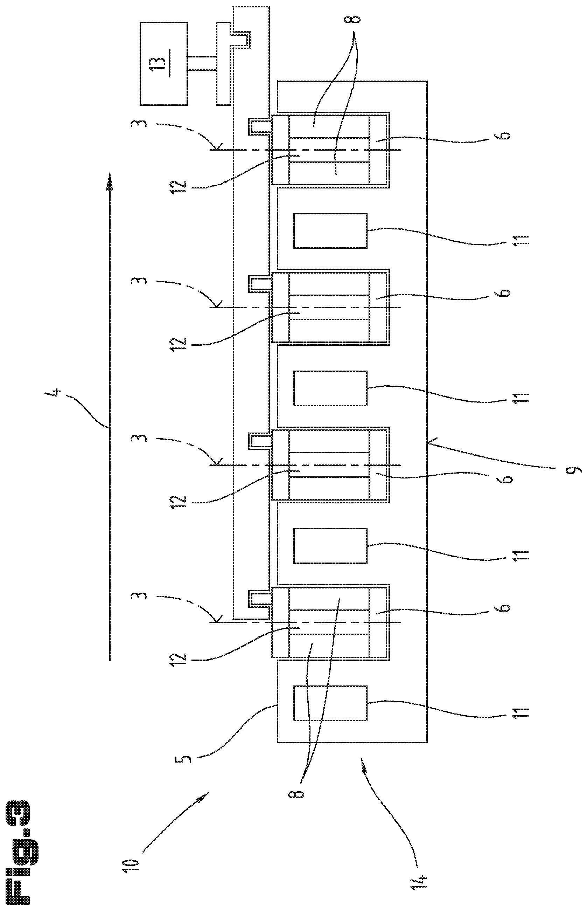

Fig. 1 zeigt eine verstellbare bzw. schaltbare magnetische Haltevorrichtung 10 im Schnitt parallel zu deren Haltefläche 9 (siehe Fig. 3) mit ersten Permanentmagneten 11 und zweiten Permanentmagneten 12. Die zweiten Permanentmagneten 12 sind relativ zu den ersten Permanentmagneten 11 jeweils um eine Drehachse 3 drehbar gelagert. Dadurch ist jeweils die Polrichtung 2 der zweiten Permanentmagnete 12 relativ zur Polrichtung 1 der ersten Permanentmagnete 11 verdrehbar. In der in Fig. 1 dargestellten ersten Relativdrehstellung weist die Polrichtung 1 der ersten Permanentmagnete 11 und die Polrichtung 2 der zweiten Permanentmagnete 12 in dieselbe Richtung (parallele Ausrichtung).

In Fig. 2 (freigebender Zustand) sind die zweiten Permanentmagnete 12 bzw. deren Polrichtungen 2 - im Vergleich zur Fig. 1 (haltender Zustand) - um 180° gedreht. In dieser zweiten Relativdrehstellung weisen die Polrichtungen 1, 2 entgegengesetzte Richtungen (anti-parallele Ausrichtung).

Vorteilhaft ist, wenn in der ersten Relativdrehstellung gleichnamige Pole (Pfeilspitzen bzw. Pfeilenden) des zumindest einen ersten Permanentmagneten 11 und des zumindest einen zweiten Permanentmagneten 12 einander näher sind (Fig. 1) als in der zweiten Relativdrehstellung (Fig. 2).

Selbstverständlich funktioniert das Prinzip auch nur mit einem ersten und einem zweiten Permanentmagneten, jedoch ist es zur Erzeugung einer gleichmäßigen Haltekraft und für große Halteflächen vorteilhaft, mehrere erste und zweite Permanentmagnete vorzusehen. Jeder zweite Permanentmagnet kann dabei eine eigene Drehachse aufweisen.

Wie aus den Fig. 1-3 zu sehen sind die ersten Permanentmagnete 11 und die zweiten Permanentmagnete 12 entlang einer Richtung 4 nacheinander und jeweils alternierend angeordnet.

Die Richtung 4 erstreckt sich dabei parallel zur Haltefläche. Die Drehachsen 3 der zweiten Permanentmagnete 12 stehen dabei vorzugsweise parallel zueinander.

In der vorliegenden Anordnung ist zwischen dem (maximal) haltenden und dem freigebenden Zustand eine Drehung der zweiten Permanentmagnete 12 um 180° vorgesehen. Denkbar wären auch geringere Drehwinkel, z.B. 90°, wenn die Haltekraft eine bestimmte Stärke nicht überschreiten soll oder wenn auch die ersten Permanentmagnete 11 drehbar sind und durch ihre eigene Drehung zu der Relativbewegung beitragen. Besonders bevorzugt ist, wenn die zweiten Permanentmagnete um zumindest 360° bzw. überhaupt unbeschränkt in eine Richtung drehbar sind.

Wie aus Fig. 3 zu sehen stehen die Drehachsen 3 der zweiten Permanentmagnete 12 quer (hier: im Wesentlichen senkrecht) zur Haltefläche 9.

Außerdem stehen die Drehachsen 3 der zweiten Permanentmagnete 12 quer, (hier: im Wesentlichen senkrecht) zu deren jeweiliger Polrichtung 2.

Weiters ist es vorteilhaft, wenn - wie in Fig. 3 zu sehen - die Drehachsen 3 der zweiten Permanentmagneten 12 durch den zweiten Permanentmagneten 12 gehen, vorzugsweise mit einer Achse (z.B. Längsachse) des zweiten Permanentmagneten 12 zusammenfällt.

In den dargestellten Ausführungsformen sind die ersten Permanentmagneten 11 relativ zur Haltefläche 9 drehfest angeordnet und die zweiten Permanentmagneten (12) relativ zur Haltefläche (9) drehbar angeordnet.

Es ist bevorzugt, wenn die Polrichtung 1 des/der ersten Permanentmagnete(n) 11 und die Polrichtung 2 des/der zweiten Permanentmagneten 12 in sämtlichen Relativdrehstellungen im Wesentlichen parallel zur Haltefläche 9 stehen. Die Permanentmagnete 11, 12 können in Form von Platten oder Scheiben ausgebildet sein, die im Wesentlichen senkrecht zur Haltefläche 9 stehen.

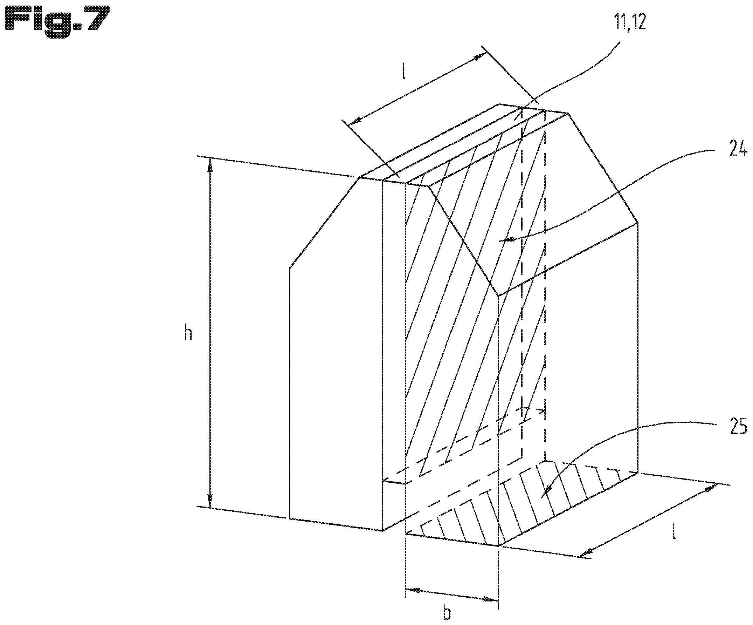

Fig. 7 zeigt eine bevorzugte Dimensionierung eines Permanentmagneten 11, 12. Dabei stehen die Polflächen 24 (schraffierte vertikale Fläche in Fig. 7) in der Permanentmagnete 11, 12 jeweils im Wesentlichen senkrecht zur Haltefläche 9 (horizontale Fläche in Fig. 7). Besonders bevorzugt ist, wenn jeweils die Polfläche 24 eines Permanentmagneten 11, 12 größer als, vorzugsweise zumindest doppelt so groß wie, die sich durch Normalprojektion des Permanentmagneten 11, 12 auf die Haltefläche 9 ergebende Projektionsfläche 25 (schraffierte horizontale Fläche in Fig. 7) ist.

Fig. 3 zeigt, dass die Haltevorrichtung 10 zumindest einen Aktuator 13, insbesondere einen Motor, umfassen kann, mit dem der/die zweiten Permanentmagnet(e) 12 relativ zu dem zumindest einen ersten Permanentmagnet 11 drehbar ist/sind.

Dabei können die zweiten Permanentmagnete 12 unabhängig voneinander drehbar sein, vorzugsweise durch unabhängig ansteuerbare Aktuatoren (nicht dargestellt), oder miteinander gekoppelt und synchron drehbar sein, vorzugsweise durch einen gemeinsamen Aktuator 13 (Fig. 3).

Die Permanentmagnete 11, 12 können, vorzugsweise zur Gänze, innerhalb eines Gehäuses 5, welches vorzugsweise in Form eines Blockes ausgebildet ist, angeordnet sein (Fig. 3).

Die Haltevorrichtung 10 kann drehbar gelagerte Halterungen 6 aufweisen, die jeweils einen zweiten Permanentmagneten 12 halten. Die Halterungen 6 können jeweils in zylinderförmigen Aufnahmen 7 der Haltevorrichtung 10 bzw. des Gehäuses 5 eingesetzt sein. Eine Halterung 6 kann auch einen Feldformungsabschnitt 8 aus weichmagnetischem Material tragen, der neben dem zweiten Permanentmagneten 12 angeordnet ist und für einen optimalen Verlauf der Feldlinien sorgt.

Die Halterungen 6 sind von einer der Haltefläche 9 abgewandten Seite der Haltevorrichtung 10 zugänglich und über ein Synchronisiermittel (gemeinsame Antriebsstange; siehe Fig. 3) miteinander und mit dem Aktuator 13 verbunden.

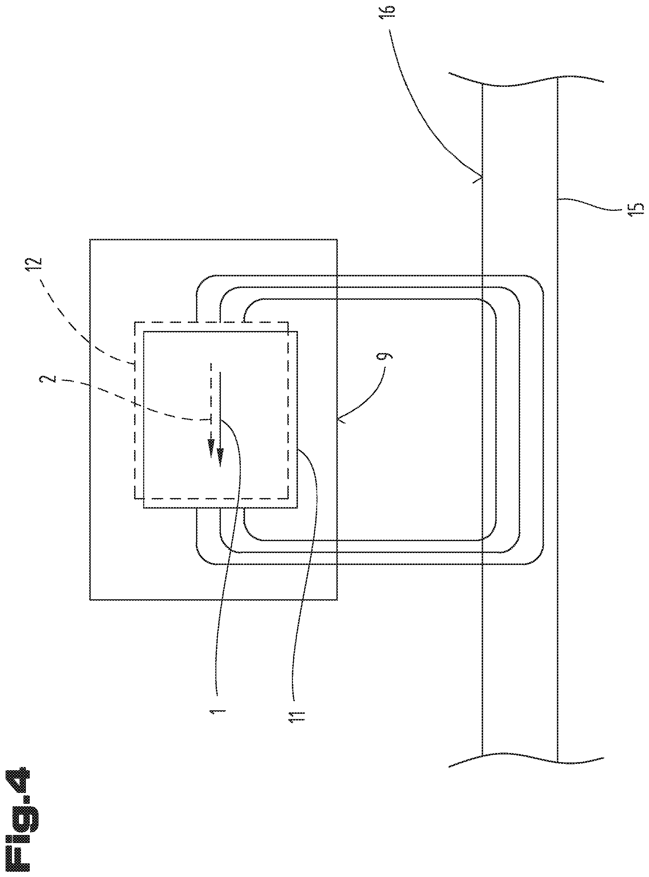

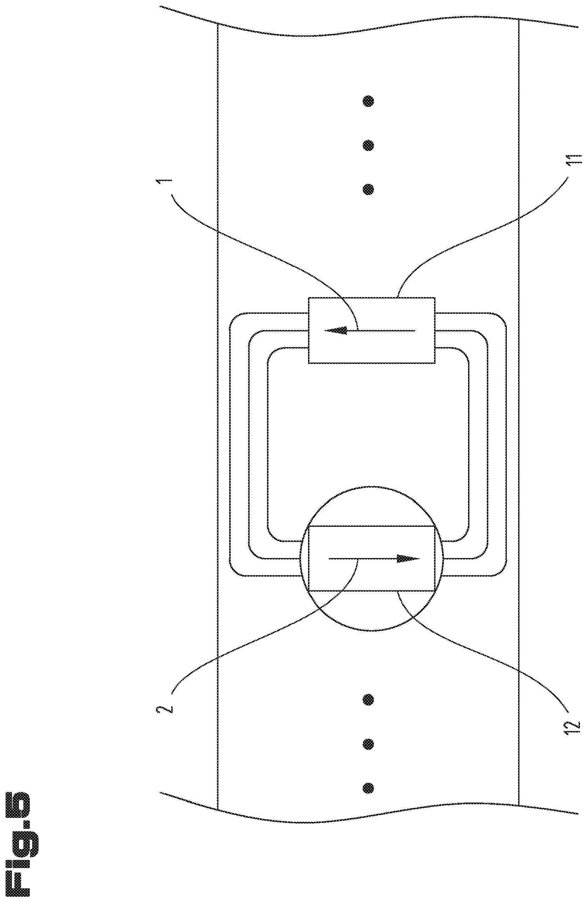

Im Folgenden wird das Prinzip der Erfindung auch nochmals anhand der Fig. 4 und 5 näher erläutert. Fig. 4 stellt einen Schnitt senkrecht zur Haltefläche 9 dar und entspricht der ersten Relativdrehstellung. Der in Fig. 4 hinter dem ersten Permanentmagnet 11 angeordnete zweite Permanentmagnet 12 ist aus Darstellungsgründen strichliert dargestellt. Zu sehen ist, dass sich die Feldlinien außerhalb der Haltefläche 9 (hier: vornehmlich in dem Gegendruckelement 15) zu einem Kreis schließen. Die in dieselbe Richtung weisenden Polrichtungen wirken verstärkend auf die Haltekraft.

Fig. 5 entspricht der zweiten Relativdrehstellung, in der die Polrichtungen 1, 2 benachbarter Permanentmagnete 11, 12 in entgegengesetzte Richtung weisen. Um den Flussverlauf zu illustrieren, wurde eine Schnittdarstellung parallel zur Haltefläche 9 gewählt. Die Feldlinien verlaufen nun von dem ersten Permanentmagneten 11 zu dem (unmittelbar daneben angeordneten) gegensinnigen zweiten Permanentmagneten 12, wodurch sich ein magnetischer Kurzschluss ergibt und die in Fig. 4 dargestellten Feldlinien außerhalb der Haltefläche 9 (weitgehend) verschwinden.

Die Haltefläche 9 wird bevorzugt aus Feldformungsabschnitten aus weichmagnetischem Material gebildet. Um eine hohe (Spann)Kraft auf das zu fixierende Werkstück 20 zu erzeugen, muss in den (die Haltefläche 9 bildenden) Feldformungsabschnitten eine hohe magnetische Flussdichte herrschen. Die Spannkraft ist proportional zum Quadrat der magnetischen Flussdichte in dem jeweiligen Feldformungsabschnitt. Bei der Konstruktion eines Magnetverbundes sind die Abmessungen der Permanentmagneten, insbesondere deren Polfläche, und die Abmessungen der Feldformungsabschnitte, insbesondere deren die Haltefläche bildende bzw. der Haltefläche zugewandte Fläche, frei und unabhängig voneinander wählbar. Durch Wahl des Verhältnisses der Abmessungen, insbesondere der oben genannten Flächen, von Permanentmagneten und Feldformungsabschnitten kann die von dem Magnetverbund erzeugte Spannkraft eingestellt werden. Die Feldformungsabschnitte, die die Haltefläche 9 oder hinter der Haltefläche sitzen bilden, und die Feldformungsabschnitte, die von den Halterungen 6 getragen werden, können dabei in geometrischer Hinsicht aufeinander abgestimmt werden.

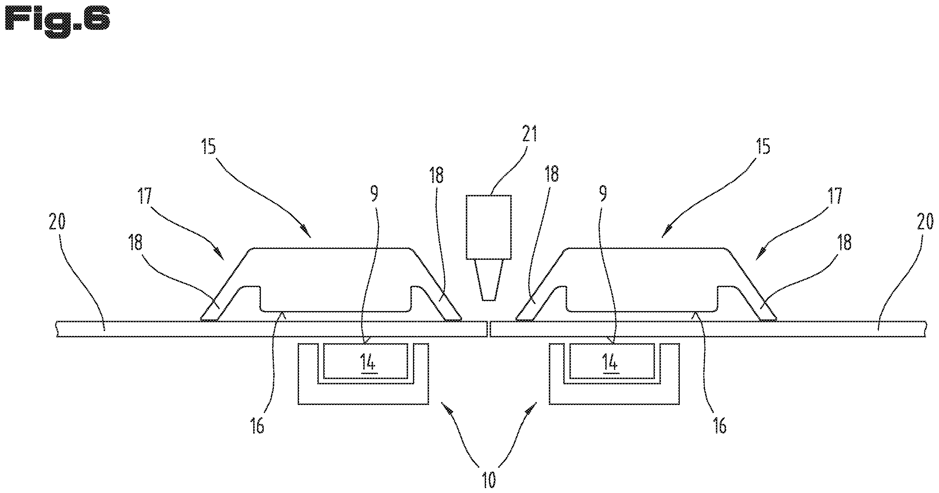

Fig. 4 und 6 zeigen eine Ausführungsform, bei der die Haltevorrichtung 10 eine Spannvorrichtung zum Einspannen eines vorzugsweise blechförmigen Gegenstandes (hier: eines Werkstückes 20) ist. Ein Gegendruckelement 15 ist mit seiner Gegendruckfläche 16 der Haltefläche 9 zugewandt, um das Werkstück 20 im Zwischenraum einzuzwängen. Das Gegendruckelement 15 kann aus weichmagnetischem Material gebildet sein und/oder einen Magneten umfassen.

Fig. 6 zeigt, dass die Haltevorrichtung 10 Teil einer Bearbeitungsvorrichtung zum Bearbeiten von Werkstücken 20 sein kann. Ein Bearbeitungswerkzeug 21 ist schematisch dargestellt. Zwei blechförmige Werkstücke 20 werden mit ihren Stirnseiten aneinander positioniert, um durch das Bearbeitungswerkzeug 21 (insbesondere durch einen Schweißvorgang) verbunden zu werden. Jedes Werkstück 20 wird dabei durch eine Haltevorrichtung 10 fixiert. Die Haltevorrichtungen 10 können hierbei mechanisch miteinander verbunden sein, beispielsweise über ein Gestell oder einen Tisch, um die beiden Bandenden in einer definierten Position zu halten.

Aus Fig. 6 ist zu sehen, dass die Haltevorrichtung 10 ein Spannprofil 17 mit zwei vorzugsweise schräg abragenden Schenkeln 18 umfasst. Das Spannprofil 17 ist an dem Gegendruckelement 15 ausgebildet.

Vorzugsweise die Gegendruckfläche 16 in Richtung zur ihrer Flächennormalen relativ zu den Enden der Schenkel 18 zurückversetzt (wie in Fig. 6 angedeutet), vorzugsweise um höchstens 1mm, besonders bevorzugt um höchstens 0,5mm.

Ein weiterer Aspekt besteht darin, dass der die erste Magnetanordnung 3 und die zweite Magnetanordnung 4 umfassende Magnetverbund 14 in Bezug auf das Spannprofil 17 asymmetrisch (d.h. nicht mittig) angeordnet ist. Dabei ist der Abstand des Magnetverbundes 14 zu dem einen Schenkel 18 des Spannprofils 17 größer, vorzugsweise um 20% größer, als der Abstand des Magnetverbundes 14 zu dem anderen Schenkel 18. Der Magnetverbund 14 ist daher jenem Schenkel 18 näher, der die Kannte des Werkstückes (hier: des Bleches oder Bandes) fixiert.

Im Folgenden wird eine Ausführungsform näher beschrieben, die sich durch die Möglichkeit einer Teilaktivierung von Permanentmagneten 11, 12 bzw. Permanentmagneteinheiten auszeichnet. Erwähnt wurde bereits, dass die zweiten Permanentmagnete 12 unabhängig voneinander drehbar sind, vorzugsweise durch unabhängig ansteuerbare Aktuatoren. Eine unabhängige Ansteuerung der Permanentmagnete 12 ermöglicht die Einstellung unterschiedlicher Haltekräfte für unterschiedliche Bereiche der Haltefläche 9. Dabei kann z.B. auch ein (vorübergehend nicht gebrauchter) Bereich überhaupt nicht mit Haltekraft beaufschlagt sein.

Durch unterschiedliche Werkstückgröße, insbesondere unterschiedliche Bandbreite bei Bändern, ist es manchmal notwendig, nur einen Teil der Halte- bzw. Spannvorrichtung zu aktivieren. Die über das Werkstück 20 hinausragenden Vorrichtungsteile würden so stark angezogen werden, dass es insbesondere im Randbereich der Werkstücke zu einer unzulässigen, qualitätsschädlichen Verformung der Vorrichtung kommen würde.

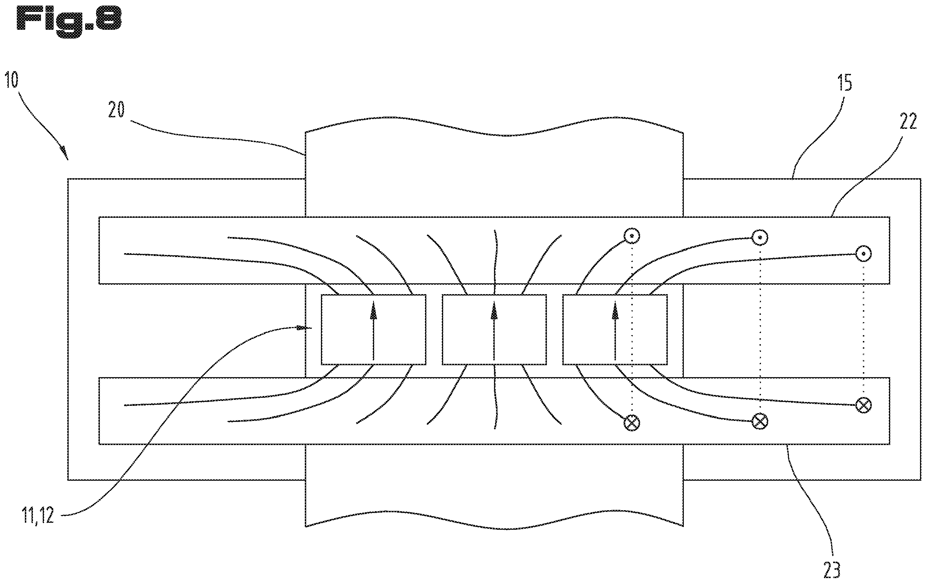

Bevorzugt ist, wenn sich entlang der Anordnung der Permanentmagnete 11, 12 zumindest ein Polschuh 22, 23 durchgängig erstreckt, wobei sich vorzugsweise beidseits der Anordnung der Permanentmagnete 11, 12 je ein Polschuh 22, 23 durchgängig erstreckt (Fig. 8). Der zumindest eine durchgängige Polschuh 22, 23 erstreckt sich vorzugsweise entlang der gesamten Anordnung der Permanentmagnete 11, 12.

Wird nur ein Teil der weichmagnetischen Polschuhe 22, 23 mit magnetischem Fluss aus Elektro- oder Permanentmagneten beaufschlagt, so verteilt sich der magnetische Rückschluss nicht nur auf den Bereich des Werkstücks 20, sondern auch auf den nicht belegten Teil (Fig. 7). Mit dem Nachteil einer unerwünschten Spannkraft neben dem Werkstück 20. Wegen der Verteilung des Quellflusses auf die gesamte Haltefläche 9, kommt es auch zu einer verringerten magnetischen Flussdichte und damit verringerten Haltekraft im Bereich des Werkstücks 20. Dies ist insbesondere bei Bearbeitung eines nichtmagnetischen Werkstücks 20 der Fall, da der magnetische Widerstand im Bereich des Werkstücks 20 eben so groß ist, wie im neben liegenden Luftspalt.

Eine Unterbrechung der Polschuhe in Längsrichtung nach jedem Magneten oder nach jeder Beschaltungseinheit durch Luftspalt oder nichtmagnetisches Material würde die laterale Ausbreitung des magnetischen Flusses unterbinden und die Haltekraft auf das Werkstück bündeln. Eine Unterbrechung der Polschuhe würde jedoch die Nutzung der Polschuhe als konstruktives, tragendes Element in Längsrichtung unmöglich machen. Es müsste ein zusätzliches, nichtmagnetisches tragendes Element eingebracht werden.

Durch die erfindungsgemäße Anordnung mit erstem Permanentmagnet 11 und zweitem Permanentmagnet 12 ist es auch bei Teilbeschaltung möglich, durchgehende, tragende Polschuhe 22, 23 zu verwenden, ohne Einbuße von Haltekraft und ohne Nebenschluss im nicht belegten / nicht aktivierten Bereich. Durch die Erhöhung der magnetischen Flussdichte in den Polschuhen 22, 23 bei entsprechendem Verhältnis von Permanentmagnet-Polfläche zu Querschnitt der Polschuhe sind die Polschuhe 22, 23 im Bereich der deaktivierten Haltevorrichtung in magnetische Sättigung (Fig. 8). Erster Permanentmagnet 11 und zweiter Permanentmagnet 12 sind entgegengesetzt ausgerichtet. Der magnetische Fluss verläuft vom Nordpol des ersten Permanentmagneten 11 durch den Polschuh 22 zum Südpol des zweiten Permanetmagneten 12 und im anderen Polschuh 23 vom Nordpol des zweiten Permanentmagneten 12 zum Südpol des ersten Permanentmagneten 11. Da die Polschuhe 22, 23 im Bereich der Deaktivierung durch die antiparallel ausgerichteten Permanentmagneten 11, 12 magnetisch gesättigt sind, können sie keinen weiteren magnetischen Fluss der Magnete aus dem aktivierten Bereich ableiten. Der magnetische Rückschluss und die Haltekraft der aktivierten Magnete (siehe zentraler Bereich der Haltevorrichtung 10 in Fig. 8) bleiben auch bei durchgehenden, konstruktiv tragenden Polschuhen 22, 23 auf den Bereich des Werkstücks 20 begrenzt.

Die Größe der Magnete in Längsrichtung kann entsprechend optimiert sein. Sind sie zu klein, ist der Polschuh nicht in Sättigung. Sind sie zu groß, muss ein Teil des magnetischen Rückflusses über das Gegendruckelement (bzw. -platte) 15 erfolgen und die Vorrichtung kann nicht vollständig deaktiviert werden.

Wie bereits aus der Einleitung hervorgeht ist die Erfindung nicht auf die dargestellten Ausführungsbeispiele beschränkt. So können insbesondere Anzahl, Größe, Form, Anordnung (insb. ihr gegenseitiger Abstand) und Ausrichtung der Permanentmagnete variieren. Auch könnte selbstverständlich die (äußere) Form des Magnetverbundes bzw. Gehäuses als solche von der dargestellten Ausführungsformen verschieden sein.

### Bezugszeichenaufstellung

- 1: Polrichtung
- 2: Polrichtung
- 3: Drehachse
- 4: Richtung
- 5: Gehäuse
- 6: Halterung
- 7: Aufnahme
- 8: Feldformungsabschnitt
- 9: Haltefläche
- 10: Haltevorrichtung
- 11: Erster Permanentmagnet
- 12: Zweiter Permanentmagnet
- 13: Aktuator
- 14: Magnetverbund
- 15: Gegendruckelement
- 16: Gegendruckfläche
- 17: Spannprofil
- 18: Schenkel
- 19: Verschieberichtung
- 20: Werkstück
- 21: Bearbeitungswerkzeug
- 22: Polschuh
- 23: Polschuh
- 24: Polfläche
- 25: Projektionsfläche eines Permanentmagneten auf die Haltefläche

## Patentansprüche

1. Bearbeitungsvorrichtung zum Bearbeiten von vorzugsweise blech- oder bandförmigen Werkstücken (20), insbesondere zum Verschweißen, Schneiden oder Fräsen, wobei die Bearbeitungsvorrichtung zumindest ein Bearbeitungswerkzeug (21) und zumindest eine magnetische Haltevorrichtung (10), insbesondere Spannvorrichtung, zum temporären Fixieren eines Werkstückes (20) vorzugsweise im Arbeitsbereich des Bearbeitungswerkzeuges (21) aufweist, **dadurch gekennzeichnet, dass** die Haltevorrichtung (10) eine Haltefläche (9), zumindest einen ersten Permanentmagneten (11) und zumindest einen zweiten Permanentmagneten (12) umfasst, wobei der zumindest eine zweite Permanentmagnet (12) relativ zu dem zumindest einen ersten Permanentmagneten (11) um eine Drehachse (3) drehbar gelagert ist, wodurch die Polrichtung (2) des zweiten Permanentmagneten (12) relativ zur Polrichtung (1) des ersten Permanentmagneten (11) verdrehbar ist, wobei die Drehachse (3) des zumindest einen zweiten Permanentmagneten (12) quer, vorzugsweise im Wesentlichen senkrecht, zur Haltefläche (9) steht.

2. Bearbeitungsvorrichtung nach Anspruch 1, **dadurch gekennzeichnet, dass** die Haltevorrichtung (10) zumindest zwei, vorzugsweise eine Vielzahl von ersten Permanentmagneten (11) und zumindest zwei, vorzugsweise eine Vielzahl von zweiten Permanentmagneten (12) aufweist, wobei die zweiten Permanentmagnete (12) relativ zu den ersten Permanentmagneten (11) jeweils um eine Drehachse (3) drehbar gelagert sind, wodurch die Polrichtungen (2) der zweiten Permanentmagnete (12) relativ zu den Polrichtungen (1) der ersten Permanentmagnete (11) verdrehbar sind.

3. Bearbeitungsvorrichtung nach Anspruch 1 oder 2, **dadurch gekennzeichnet, dass** die ersten Permanentmagnete (11) und die zweiten Permanentmagnete (12) entlang einer Richtung (4), vorzugsweise in einer Richtung parallel zur Haltefläche (9), alternierend angeordnet sind, wobei vorzugsweise die Drehachsen (3) der zweiten Permanentmagnete (12) parallel zueinanderstehen.

4. Bearbeitungsvorrichtung nach einem der vorhergehenden Ansprüche, **dadurch gekennzeichnet, dass** die Permanentmagnete (11, 12) entlang einer Richtung (4) parallel zur Haltefläche (9) nacheinander angeordnet sind.

5. Bearbeitungsvorrichtung nach einem der vorhergehenden Ansprüche, **dadurch gekennzeichnet, dass** der zumindest eine zweite Permanentmagnet (12) relativ zu dem zumindest einen ersten Permanentmagneten (11) um zumindest 90°, vorzugsweise um zumindest 180°, besonders bevorzugt um zumindest 360°, verdrehbar ist.

6. Bearbeitungsvorrichtung nach einem der vorhergehenden Ansprüche, **dadurch gekennzeichnet, dass** die Polrichtung (1) des zumindest einen ersten Permanentmagneten (11) und die Polrichtung (2) des zumindest einen zweiten Permanentmagneten (12) in einer ersten Relativdrehstellung in dieselbe Richtung und in einer zweiten Relativdrehstellung in entgegengesetzte Richtungen weisen.

7. Bearbeitungsvorrichtung nach einem der vorhergehenden Ansprüche, **dadurch gekennzeichnet, dass** die Drehachse (3) des zumindest einen zweiten Permanentmagneten (12) quer, vorzugsweise im Wesentlichen senkrecht, zur Polrichtung (2) des zumindest einen zweiten Permanentmagneten (12) steht.

8. Bearbeitungsvorrichtung nach einem der vorhergehenden Ansprüche, **dadurch gekennzeichnet,**
**dass** die Drehachse (3) des zumindest einen zweiten Permanentmagneten (12) durch den zweiten Permanentmagneten (12) geht, vorzugsweise mit einer Achse des zweiten Permanentmagneten (12) zusammenfällt,
und/oder dass in einer ersten Relativdrehstellung gleichnamige Pole des zumindest einen ersten Permanentmagneten (11) und des zumindest einen zweiten Permanentmagneten (12) einander näher sind als in einer zweiten Relativdrehstellung.

9. Bearbeitungsvorrichtung nach einem der vorhergehenden Ansprüche, **dadurch gekennzeichnet, dass** der zumindest eine erste Permanentmagnet (11) relativ zur Haltefläche (9) drehfest angeordnet ist und der zumindest eine zweite Permanentmagnet (12) relativ zur Haltefläche (9) drehbar angeordnet ist.

10. Bearbeitungsvorrichtung nach einem der vorhergehenden Ansprüche, **dadurch gekennzeichnet, dass** die Polrichtung (1) des zumindest einen ersten Permanentmagneten (11) und die Polrichtung (2) des zumindest einen zweiten Permanentmagneten (12), vorzugsweise in sämtlichen Relativdrehstellungen, im Wesentlichen parallel zur Haltefläche (9) stehen und/oder dass die Permanentmagnete (11, 12) in Form von Platten oder Scheiben ausgebildet sind, die im Wesentlichen senkrecht zur Haltefläche (9) stehen.

11. Bearbeitungsvorrichtung nach einem der vorhergehenden Ansprüche, **dadurch gekennzeichnet, dass** die Polflächen (24) des zumindest einen ersten Permanentmagneten (11) und/oder die Polflächen (24) des zumindest einen zweiten Permanentmagneten (12) im Wesentlichen senkrecht zur Haltefläche (9) stehen.

12. Bearbeitungsvorrichtung nach einem der vorhergehenden Ansprüche, **dadurch gekennzeichnet, dass** jeweils die Polfläche (24) eines Permanentmagneten (11, 12) größer als, vorzugsweise zumindest doppelt so groß wie, die sich durch Normalprojektion des Permanentmagneten (11, 12) auf die Haltefläche (9) ergebende Projektionsfläche (25) ist.

13. Bearbeitungsvorrichtung nach einem der vorhergehenden Ansprüche, **dadurch gekennzeichnet, dass** sich entlang der Anordnung der Permanentmagnete (11, 12) zumindest ein Polschuh (22, 23) durchgängig erstreckt, wobei sich vorzugsweise beidseits der Anordnung der Permanentmagnete (11, 12) je ein Polschuh (22, 23) durchgängig erstreckt.

14. Bearbeitungsvorrichtung nach Anspruch 13, **dadurch gekennzeichnet, dass** sich der zumindest eine Polschuh (22, 23) entlang der gesamten Anordnung der Permanentmagnete (11, 12) durchgängig erstreckt.

15. Bearbeitungsvorrichtung nach einem der vorhergehenden Ansprüche, **dadurch gekennzeichnet, dass** die Haltevorrichtung (10) zumindest einen Aktuator (13), insbesondere einen Motor, umfasst, mit dem der zumindest eine zweite Permanentmagnet (12) relativ zu dem zumindest einen ersten Permanentmagnet (11) drehbar ist.

16. Bearbeitungsvorrichtung nach einem der vorhergehenden Ansprüche, **dadurch gekennzeichnet, dass** die zweiten Permanentmagnete (12) unabhängig voneinander drehbar sind, vorzugsweise durch unabhängig ansteuerbare Aktuatoren, oder dass die zweiten Permanentmagnete (12) miteinander gekoppelt und synchron drehbar sind, vorzugsweise durch einen gemeinsamen Aktuator (13).

17. Bearbeitungsvorrichtung nach einem der vorhergehenden Ansprüche, **dadurch gekennzeichnet, dass** die Permanentmagnete (11, 12), vorzugsweise zur Gänze, innerhalb eines Gehäuses (5), welches vorzugsweise in Form eines Blockes ausgebildet ist, angeordnet sind.

18. Bearbeitungsvorrichtung nach einem der vorhergehenden Ansprüche, **dadurch gekennzeichnet, dass** die Haltevorrichtung (10) zumindest eine drehbar gelagerte Halterung (6) aufweist, die einen zweiten Permanentmagneten (12) hält, wobei vorzugsweise die Halterung (6) in einer zylinderförmigen Aufnahme (7) der Haltevorrichtung (10) eingesetzt ist.

19. Bearbeitungsvorrichtung nach Anspruch 18, **dadurch gekennzeichnet,**
**dass** die zumindest eine Halterung (6) einen Feldformungsabschnitt (8) aus weichmagnetischem Material trägt, der neben dem zweiten Permanentmagneten (12) angeordnet ist,
und/oder dass die zumindest eine Halterung (6) von einer der Haltefläche (9) abgewandten Seite der Haltevorrichtung (10) zugänglich ist.

20. Bearbeitungsvorrichtung nach einem der vorhergehenden Ansprüche, **dadurch gekennzeichnet, dass** die Haltevorrichtung (10) eine Spannvorrichtung zum Einspannen eines vorzugsweise blechförmigen Gegenstandes ist und ein Gegendruckelement (15) mit einer der Haltefläche (9) zugewandten Gegendruckfläche (16) umfasst, wobei vorzugsweise das Gegendruckelement (16) aus weichmagnetischem Material gebildet ist und/oder einen Magneten umfasst.

21. Bearbeitungsvorrichtung nach Anspruch 20, **dadurch gekennzeichnet, dass** die Haltevorrichtung (10) ein Spannprofil (17) mit zwei vorzugsweise schräg abragenden Schenkeln (18) umfasst.

22. Bearbeitungsvorrichtung nach Anspruch 21, **dadurch gekennzeichnet,**
**dass** das Spannprofil (17) an dem Gegendruckelement (15) ausgebildet ist, wobei vorzugsweise die Gegendruckfläche (16) in Richtung zur ihrer Flächennormalen relativ zu den Enden der Schenkel (18) zurückversetzt ist, vorzugsweise um höchstens 1mm, besonders bevorzugt um höchstens 0,5mm,
und/oder dass der durch die Permanentmagnete (11, 12) gebildete Magnetverbund (14) in Bezug auf das Spannprofil (17) asymmetrisch angeordnet ist, wobei der Abstand des Magnetverbundes (14) zu dem einen Schenkel (18) des Spannprofils (17) größer, vorzugsweise um 20% größer, ist als der Abstand des Magnetverbundes (14) zu dem anderen Schenkel (18).

## Claims

1. A machining device for machining - preferably sheet- or strip-shaped - workpieces (20), in particular for welding, cutting or milling, wherein the machining device comprises at least one machining tool (21) and at least one magnetic holding device (10), in particular clamping device, for temporarily fixing a workpiece (20) preferably in the working area of the machining tool (21), **characterized in that** the holding device (10) comprises a holding surface (9), at least one first permanent magnet (11) and at least one second permanent magnet (12), wherein the at least one second permanent magnet (12) is rotatably mounted relative to the at least one first permanent magnet (11) about a rotational axis (3), whereby the pole direction (2) of the second permanent magnet (12) is rotatable relative to the pole direction (1) of the first permanent magnet (11), wherein the rotational axis (3) of the at least one second permanent magnet (12) is transverse, preferably substantially perpendicular, to the holding surface (9).

2. The machining device according to claim 1, **characterized in that** the holding device (10) comprises at least two, preferably a plurality of first permanent magnets (11) and at least two, preferably a plurality of second permanent magnets (12), wherein the second permanent magnets (12) are each rotatably mounted relative to the first permanent magnets (11) about a rotational axis (3), whereby the pole directions (2) of the second permanent magnets (12) are rotatable relative to the pole directions (1) of the first permanent magnets (11).

3. The machining device according to claim 1 or 2, **characterized in that** the first permanent magnets (11) and the second permanent magnets (12) are arranged alternately along a direction (4), preferably in a direction parallel to the holding surface (9), wherein preferably the rotational axes (3) of the second permanent magnets (12) are parallel to each other.

4. The machining device according to one of the preceding claims, **characterized in that** the permanent magnets (11, 12) are arranged one after the other along a direction (4) parallel to the holding surface (9).

5. The machining device according to one of the preceding claims, **characterized in that** the at least one second permanent magnet (12) is rotatable relative to the at least one first permanent magnet (11) by at least 90°, preferably by at least 180°, particularly preferred by at least 360°.

6. The machining device according to one of the preceding claims, **characterized in that** the pole direction (1) of the at least one first permanent magnet (11) and the pole direction (2) of the at least one second permanent magnet (12) point in the same direction in a first relative rotational position and in opposite directions in a second relative rotational position.

7. The machining device according to one of the preceding claims, **characterized in that** the rotational axis (3) of the at least one second permanent magnet (12) is transverse, preferably substantially perpendicular, to the pole direction (2) of the at least one second permanent magnet (12).

8. The machining device according to one of the preceding claims, **characterized in that** the rotational axis (3) of the at least one second permanent magnet (12) passes through the second permanent magnet (12), preferably coinciding with an axis of the second permanent magnet (12),
and/or **in that**, in a first relative rotational position, same-named poles of the at least one first permanent magnet (11) and of the at least one second permanent magnet (12) are closer to one another than in a second relative rotational position.

9. The machining device according to one of the preceding claims, **characterized in that** the at least one first permanent magnet (11) is arranged non-rotatably relative to the holding surface (9) and the at least one second permanent magnet (12) is arranged rotatably relative to the holding surface (9).

10. The machining device according to one of the preceding claims, **characterized in that** the pole direction (1) of the at least one first permanent magnet (11) and the pole direction (2) of the at least one second permanent magnet (12), preferably in all relative rotational positions, are substantially parallel to the holding surface (9) and/or that the permanent magnets (11, 12) are designed in the form of plates or discs which are substantially perpendicular to the holding surface (9).

11. The machining device according to one of the preceding claims, **characterized in that** the pole faces (24) of the at least one first permanent magnet (11) and/or the pole faces (24) of the at least one second permanent magnet (12) are substantially perpendicular to the holding surface (9).

12. The machining device according to one of the preceding claims, **characterized in that** in each case, the pole face (24) of a permanent magnet (11, 12) is larger than, preferably at least twice as large as, the projection area (25) resulting from normal projection of the permanent magnet (11, 12) onto the holding surface (9).

13. The machining device according to one of the preceding claims, **characterized in that** at least one pole shoe (22, 23) extends continuously along the arrangement of the permanent magnets (11, 12), wherein preferably one pole shoe (22, 23) each extends continuously on both sides of the arrangement of the permanent magnets (11, 12).

14. The machining device according to claim 13, **characterized in that** the at least one pole shoe (22, 23) extends continuously along the entire arrangement of the permanent magnets (11, 12).

15. The machining device according to one of the preceding claims, **characterized in that** the holding device (10) comprises at least one actuator (13), in particular a motor, with which the at least one second permanent magnet (12) is rotatable relative to the at least one first permanent magnet (11).

16. The machining device according to one of the preceding claims, **characterized in that** the second permanent magnets (12) are rotatable independently of each other, preferably by independently controllable actuators, or that the second permanent magnets (12) are coupled together and rotatable synchronously, preferably by a common actuator (13).

17. The machining device according to one of the preceding claims, **characterized in that** the permanent magnets (11, 12) are arranged, preferably in their entirety, inside a housing (5), which preferably is formed in the shape of a block.

18. The machining device according to one of the preceding claims, **characterized in that** the holding device (10) has at least one rotatably mounted holder (6) which holds a second permanent magnet (12), wherein preferably the holder (6) is inserted in a cylindrical receptacle (7) of the holding device (10).

19. The machining device according to claim 18, **characterized in that** the at least one holder (6) supports a field-shaping section (8) of soft magnetic material which is arranged next to the second permanent magnet (12),
and/or that the at least one holder (6) is accessible from a side of the holding device (10) facing away from the holding surface (9).

20. The machining device according to one of the preceding claims, **characterized in that** the holding device (10) is a clamping device for clamping a - preferably sheet metal shaped - object and comprises a counter-pressure element (15) having a counter-pressure surface (16) facing the holding surface (9), wherein preferably the counter-pressure element (16) is formed of soft magnetic material and/or comprises a magnet.

21. The machining device according to claim 20, **characterized in that** the holding device (10) comprises a clamping profile (17) with two preferably obliquely projecting legs (18).

22. The machining device according to claim 21, **characterized in that**
the clamping profile (17) is formed on the counter-pressure element (15), wherein preferably the counter-pressure surface (16) is set back in the direction of its surface normal relative to the ends of the legs (18), preferably by at most 1 mm, particularly preferred by at most 0.5 mm,
and/or **in that** the magnet composite (14) formed by the permanent magnets (11, 12) is arranged asymmetrically with respect to the clamping profile (17), wherein the distance of the magnet composite (14) to one leg (18) of the clamping profile (17) is greater, preferably 20% greater, than the distance of the magnet composite (14) to the other leg (18).

## Revendications

1. Dispositif d'usinage pour l'usinage de pièces (20) de préférence en forme de tôles ou de bandes, plus particulièrement pour le soudage, la coupe ou le fraisage, dans lequel le dispositif d'usinage comprend au moins un outil d'usinage (21) et au moins un dispositif de maintien magnétique (10), plus particulièrement un dispositif de serrage, pour la fixation temporaire d'une pièce (20) de préférence dans la zone de travail de l'outil d'usinage (21), **caractérisé en ce que** le dispositif de maintien (10) comprend une surface de maintien (9), au moins un premier aimant permanent (11) et au moins un deuxième aimant permanent (12), dans lequel l' au moins un deuxième aimant permanent (12) est logé de manière rotative autour d'un axe de rotation (3) par rapport à l'au moins un premier aimant permanent (11), ce qui permet de faire tourner la polarité (2) du deuxième aimant permanent (12) par rapport à la polarité (1) du premier aimant permanent (11), dans lequel l'axe de rotation (3) de l'au moins un deuxième aimant permanent (12) est transversal, de préférence globalement perpendiculaire, par rapport à la surface de maintien (9).

2. Dispositif d'usinage selon la revendication 1, **caractérisé en ce que** le dispositif de maintien (10) comprend au moins deux, de préférence une pluralité de premiers aimants permanents (11) et au moins deux, de préférence une pluralité de deuxièmes aimants permanents (12), dans lequel les deuxièmes aimants permanents (12) sont logés chacun de manière rotative autour d'un axe de rotation (3) par rapport aux premiers aimants permanents (11), ce qui permet de faire tourner la polarité (2) des deuxièmes aimants permanents (12) par rapport à la polarité (1) des premiers aimants permanents (11).

3. Dispositif d'usinage selon la revendication 1 ou 2, **caractérisé en ce que** les premiers aimants permanents (11) et les deuxièmes aimants permanents (12) sont disposés de manière alternée le long d'une direction (4), de préférence dans une direction parallèle à la surface de maintien (9), dans lequel, de préférence, les axes de rotation (3) des deuxièmes aimants permanents (12) sont parallèles entre eux.

4. Dispositif d'usinage selon l'une des revendications précédentes, **caractérisé en ce que** les aimants permanents (11, 12) sont disposés les uns après les autres le long d'une direction (4) parallèle à la surface de maintien (9).

5. Dispositif d'usinage selon l'une des revendications précédentes, **caractérisé en ce que** l'au moins un deuxième aimant permanent (12) peut être tourné par rapport à l'au moins un premier aimant permanent (11) d'au moins 90°, de préférence d'au moins 180°, plus particulièrement de préférence d'au moins 360°.

6. Dispositif d'usinage selon l'une des revendications précédentes, **caractérisé en ce que** la polarité (1) de l'au moins un premier aimant permanent (11) et la polarité (2) de l'au moins un deuxième aimant permanent (12) sont orientés, dans une première position de rotation relative, dans la même direction et, dans une deuxième position de rotation relative, dans des directions opposées.

7. Dispositif d'usinage selon l'une des revendications précédentes, **caractérisé en ce que** l'axe de rotation (3) de l'au moins un deuxième aimant permanent (12) est transversal, de préférence globalement perpendiculaire, par rapport à la polarité (2) de l'au moins un deuxième aimant permanent (12).

8. Dispositif d'usinage selon l'une des revendications précédentes, **caractérisé en ce que** l'axe de rotation (3) de l'au moins un deuxième aimant permanent (12) traverse le deuxième aimant permanent (12), de préférence coïncide avec un axe du deuxième aimant permanent (12),
et/ou **en ce que**, dans une première position de rotation relative, les pôles de même nom de l'au moins un premier aimant permanent (11) et de l'au moins un deuxième aimant permanent (12) sont plus proches entre eux que dans une deuxième position de rotation relative.

9. Dispositif d'usinage selon l'une des revendications précédentes, **caractérisé en ce que** l'au moins un premier aimant permanent (11) est disposé de manière solidaire en rotation par rapport à la surface de maintien (9) et l'au moins un deuxième aimant permanent (12) est disposé de manière rotative par rapport à la surface de maintien (9).

10. Dispositif d'usinage selon l'une des revendications précédentes, **caractérisé en ce que** la polarité (1) de l'au moins un premier aimant permanent (11) et la polarité (2) de l'au moins un deuxième aimant permanent (12), de préférence dans toutes les positions de rotation relative, sont globalement parallèles à la surface de maintien (9) et/ou **en ce que** les aimants permanents (11, 12) sont conçus sous la forme de plaques ou de disques qui sont globalement perpendiculaires à la surface de maintien (9).

11. Dispositif d'usinage selon l'une des revendications précédentes, **caractérisé en ce que** les faces polaires (24) de l'au moins un premier aimant permanent (11) et/ou les faces polaires (24) de l'au moins un deuxième aimant permanent (12) sont globalement perpendiculaires à la surface de maintien (9).

12. Dispositif d'usinage selon l'une des revendications précédentes, **caractérisé en ce que** les faces polaires (24) d'un aimant permanent (11, 12) sont plus grandes, de préférence au moins deux fois plus grandes que la surface de projection (25) résultant d'une projection normale de l'aimant permanent (11, 12) sur la surface de maintien (9).

13. Dispositif d'usinage selon l'une des revendications précédentes, **caractérisé en ce que**, le long de la disposition des aimants permanents (11, 12), s'étend au moins une pièce polaire (22, 23), dans lequel, de préférence de chacun des deux côtés de la disposition des aimants permanents (11, 12), une pièce polaire (22, 23) s'étend de manière continue.

14. Dispositif d'usinage selon la revendication 13, **caractérisé en ce qu'**au moins une pièce polaire (22, 23) s'étend de manière continue le long de toute la disposition des aimants permanents (11, 12).

15. Dispositif d'usinage selon l'une des revendications précédentes, **caractérisé en ce que** le dispositif de maintien (10) comprend au moins un actionneur (13), plus particulièrement un moteur, avec lequel l'au moins un deuxième aimant permanent (12) peut tourner par rapport à l'au moins un premier aimant permanent (11).

16. Dispositif d'usinage selon l'une des revendications précédentes, **caractérisé en ce que** les deuxièmes aimants permanents (12) peuvent tourner indépendamment entre eux, de préférence grâce à des actionneurs contrôlables indépendamment ou **en ce que** les deuxièmes aimants permanents (12) peuvent tourner de manière couplée et synchrone entre eux, de préférence grâce à un actionneur (13) commun.

17. Dispositif d'usinage selon l'une des revendications précédentes, **caractérisé en ce que** les aimants permanents (11, 12) sont disposés, de préférence entièrement, à l'intérieur d'un boîtier (5) qui est conçu de préférence sous la forme d'un bloc.

18. Dispositif d'usinage selon l'une des revendications précédentes, **caractérisé en ce que** le dispositif de maintien (10) comprend au moins un support (6) logé de manière rotative, qui maintient un deuxième aimant permanent (12), dans lequel, de préférence, le support (6) est inséré dans un logement cylindrique (7) du dispositif de maintien (10).

19. Dispositif d'usinage selon la revendication 18, **caractérisé en ce que**
l'au moins un support (6) supporte une portion de formation de champ (8) constituée d'un matériau magnétique doux, qui est disposé près du deuxième aimant permanent (12),
et/ou **en ce que** l'au moins un support (6) est accessible à partir d'un côté du dispositif de maintien (10) opposé à la surface de maintien (9).

20. Dispositif d'usinage selon l'une des revendications précédentes, **caractérisé en ce que** le dispositif de maintien (10) comprend un dispositif de serrage pour le serrage d'un objet de préférence en forme de tôle et un élément de contre-pression (15) avec une surface de contre-pression (16) orientée vers la surface de maintien (9), dans lequel, de préférence, l'élément de contre-pression (16) est constitué d'un matériau magnétique doux et/ou comprend un aimant.

21. Dispositif d'usinage selon la revendication 20, **caractérisé en ce que** le dispositif de maintien (10) comprend un profilé de serrage (17) avec deux branches (18) de préférence dépassant de manière oblique.

22. Dispositif d'usinage selon la revendication 21, **caractérisé en ce que** le profilé de serrage (17) est réalisé sur l'élément de contre-pression (15), dans lequel, de préférence, la surface de contre-pression (16) est en retrait dans la direction de sa normale à la surface par rapport aux extrémités des branches (18), de préférence de maximum 1 mm, plus particulièrement de préférence de maximum 0,5 mm,
et/ou **en ce que** le composé magnétique (14) constitué des aimants permanents (11, 12) est disposé de manière asymétrique par rapport au profilé de serrage (17), dans lequel la distance entre le composé magnétique (14) et une branche (18) du profilé de serrage (17) est supérieure, de préférence de 20 %, à la distance entre le composé magnétique (14) et l'autre branche (18).
